# EUROPEAN PATENT APPLICATION

(11) **EP 4 790 214 A1**
(43) Date of publication of application: **12.08.2026**
(21) Application number: 26154853.1
(22) Date of filing: 28.01.2026
(51) Int. Cl.: E05B 79/20, B60K 15/05, E05B 81/90, E05B 83/34, E05B 85/06, E05B 17/14

(54) **AUXILIARY UNLOCKING SYSTEM AND METHOD FOR VEHICLE, AND VEHICLE**

(30) Priority: 10.02.2025 CN 202510144341
(71) Applicant: Ford Global Technologies, LLC, Dearborn, MI 48126-2701 (US)
(72) Inventor: JIANG, Ryan, Jiangsu (CN); ZHANG, Li, Jiangsu (CN); LIU, Qiuhong, Jiangsu (CN)
(74) Representative: Haseltine Lake Kempner LLP

(57) **Abstract**

The present disclosure relates to an auxiliary unlocking system and method for a vehicle. The auxiliary unlocking system comprises a first operating element assembly operably connected to a closure member of the vehicle and located outside the vehicle. The first operating element assembly is configured to be actuable to perform security verification and unlock the closure member only when state of charge of a battery of the vehicle is less than a threshold value. In addition, the present disclosure also relates to a vehicle comprising the auxiliary unlocking system.

## Description

### TECHNICAL FIELD

The present disclosure relates to the field of vehicles, and specifically to an auxiliary unlocking system and method for a vehicle, and a vehicle comprising the auxiliary unlocking system.

### BACKGROUND

Under normal circumstances, a user can unlock a closure member (e.g., a front cabin door) of a vehicle via an intelligent key system or a mobile device to gain access to the interior of the vehicle (e.g., a front cabin of the vehicle). However, when the state of charge of a battery of the vehicle is low, it may not be possible to gain access to the vehicle interior through the intelligent key system or the mobile device. In such instances, access to the vehicle interior can be provided by an auxiliary unlocking system of the vehicle.

### SUMMARY

According to a first aspect of the present disclosure, there is provided an auxiliary unlocking system for a vehicle, comprising a first operating element assembly operably connected to a closure member of the vehicle and located outside the vehicle, wherein the first operating element assembly is configured to be actuable to perform security verification and unlock the closure member only when state of charge of a battery of the vehicle is less than a threshold value.

In an embodiment of the present disclosure, the first operating element assembly comprises a primary switch element and a secondary switch element, the primary switch element being configured to be actuable to open a cover member covering the secondary switch element in response to the state of charge of the battery being less than the threshold value, and the secondary switch element is configured to be actuable to perform security verification and unlock the closure member.

In an embodiment of the present disclosure, the auxiliary unlocking system further comprises a locking member disposed between the cover member and the primary switch element, and the locking member is configured to: release a locked state of the primary switch element and the cover member in response to the state of charge being less than the threshold value, so as to allow the primary switch element to be actuated to open the cover member; and maintain the locked state of the primary switch element and the cover member in response to the state of charge being greater than or equal to the threshold value, so as to prevent the primary switch element from being actuated to open the cover member.

In an embodiment of the present disclosure, the locking member comprises an electric locking device or a mechanical locking device, and the primary switch element is connected to a first latch mechanism of the cover member.

In an embodiment of the present disclosure, the electric locking device comprises an electromagnetic locking device disposed between the first latch mechanism and the primary switch element, and the electromagnetic locking device is configured to be de-energized to release a locked state of the primary switch element and the first latch mechanism in response to the state of charge being less than the threshold value, and to be energized to maintain the locked state of the primary switch element and the first latch mechanism in response to the state of charge being greater than or equal to the threshold value.

In an embodiment of the present disclosure, the mechanical locking device comprises a locking element and an engaging portion disposed between the first latch mechanism and the primary switch element, the mechanical locking device is configured to disengage the locking element from the engaging portion in response to the state of charge being less than the threshold value, so as to release the locked state of the primary switch element and the first latch mechanism; and to engage the locking element with the engaging portion in response to the state of charge being greater than or equal to the threshold value, so as to maintain the locked state of the primary switch element and the first latch mechanism.

In an embodiment of the present disclosure, the primary switch element is connected to the first latch mechanism via a first cable, on which the locking member is disposed; or the primary switch element, the first latch mechanism and the locking member are integrated together.

In an embodiment of the present disclosure, the secondary switch element is disposed within an external port of the vehicle, and the external port is configured to receive a power source supplied to the vehicle.

In an embodiment of the present disclosure, the secondary switch element is mounted on a body component of the vehicle via an anti-theft bolt, and the anti-theft bolt is configured such that its bolt head can be sheared off after the installation of the secondary switch element is completed.

In an embodiment of the present disclosure, the auxiliary unlocking system further comprises a wiring device and a second operating element assembly operably connected to the closure member, and the wiring device is configured to independently control the first operating element assembly and the second operating element assembly to unlock the closure member respectively.

In an embodiment of the present disclosure, the wiring device comprises a housing and a moving portion disposed in the housing, the moving portion is connected to a second latch mechanism of the closure member, the secondary switch element and an operating element of the second operating element assembly via a second cable, a third cable and a fourth cable respectively, and is configured to move under the action of the third cable and the fourth cable respectively, and drive the second cable to move to unlock the second latch mechanism.

In an embodiment of the present disclosure, the secondary switch element comprises a lock core configured to perform security verification and unlock the closure member through at least one interaction with a key.

In an embodiment of the present disclosure, the lock core has a force application point when it is actuated and a rotation axis, the distance between the force application point and the rotation axis of the lock core is smaller than the distance between the key and the rotation axis.

In an embodiment of the present disclosure, the lock core comprises a self-resetting spring, and the lock core is configured to reset via the self-resetting spring after the key interacts with it for the first time in a specific direction, and unlock the closure member when the key interacts with it again in the specific direction.

In an embodiment of the present disclosure, the closure member comprises a front cabin cover, a side door or a rear cabin cover of the vehicle.

According to a second aspect of the present disclosure, there is provided a vehicle, comprising: a closure member; and an auxiliary unlocking system comprising a first operating element assembly operably connected to the closure member and located outside the vehicle, wherein the first operating element assembly is configured to be actuable to perform security verification and unlock the closure member only when state of charge of a battery of the vehicle is less than a threshold value.

According to a third aspect of the present disclosure, there is provided an auxiliary unlocking method for a vehicle, comprising: performing security verification and unlocking a closure member of the vehicle via a first operating element assembly only when state of charge of a battery of the vehicle is less than a threshold value.

In an embodiment of the present disclosure, the first operating element assembly comprises a primary switch element and a secondary switch element, and the auxiliary unlocking method comprises: opening a cover member covering the secondary switch element via the primary switch element in response to the state of charge of the battery being less than the threshold value; and performing security verification and unlocking the closure member via the secondary switch element.

In an embodiment of the present disclosure, the auxiliary unlocking method comprises: releasing a locked state of the primary switch element and the cover member via a locking member in response to the state of charge being less than the threshold value, so as to allow the primary switch element to open the cover member; and maintaining the locked state of the primary switch element and the cover member via the locking member in response to the state of charge being greater than or equal to the threshold value, so as to prevent the primary switch element from opening the cover member.

In an embodiment of the present disclosure, the secondary switch element comprises a lock core, and the auxiliary unlocking method comprises: performing security verification and unlocking the closure member via the lock core through at least one interaction of a key with the lock core in a specific direction.

### BRIEF DESCRIPTION OF THE FIGURES

To illustrate the technical solutions in the embodiments of the present disclosure or in the prior art more clearly, the drawings required for the description of the embodiments or the prior art will be briefly introduced below. Obviously, the drawings described below are only some embodiments of the present disclosure, and those of ordinary skill in the art can obtain other embodiments based on these drawings without creative efforts.
FIG. 1 shows a schematic diagram of a vehicle according to an embodiment of the present disclosure;
FIG. 2 shows a schematic diagram of an auxiliary unlocking system for a vehicle according to an embodiment of the present disclosure;
FIG. 3 shows a schematic structural view of a portion of the auxiliary unlocking system for a vehicle according to an embodiment of the present disclosure;
FIG. 4 shows a schematic structural view of a vehicle fender according to an embodiment of the present disclosure;
FIG. 5 shows a schematic structural view of the vehicle fender shown in FIG. 4 from another perspective;
FIG. 6 shows a schematic structural view of a portion of the auxiliary unlocking system for a vehicle according to an embodiment of the present disclosure, which mainly shows a wiring device;
FIG. 7 shows a schematic diagram of the auxiliary unlocking system for a vehicle according to an embodiment of the present disclosure;
FIG. 8 shows a schematic diagram of a lock core and a key according to an embodiment of the present disclosure;
FIG. 9 shows a schematic diagram of the lock core, the key, and the fender according to an embodiment of the present disclosure;
FIG. 10 shows a schematic diagram of a wiring device according to an embodiment of the present disclosure;
FIGS. 11a and 11b are schematic diagrams illustrating operations of the lock core and the key according to an embodiment of the present disclosure;
FIG. 12 shows a schematic diagram of the lock core from another perspective according to an embodiment of the present disclosure; and
FIG. 13 shows a flowchart of an auxiliary unlocking method for a vehicle according to an embodiment of the present disclosure.

### DETAILED DESCRIPTION

To make the objectives, technical solutions, and advantages of the present disclosure clearer, the embodiments of the present disclosure will be described in further detail below with reference to specific embodiments and the accompanying drawings.

It should be noted that all references to "first" and "second" in the embodiments of the present disclosure are used to distinguish between two entities or parameters with the same name but different identities, and it is to be understood that the terms "first" and "second" are used merely for convenience of description and should not be construed as limiting the embodiments of the present disclosure, which will not be elaborated in subsequent embodiments.

One or more embodiments of the present application will be described below with reference to the accompanying drawings. The structural views are merely schematic and are not intended to limit the specific shapes and structures of the components. The flowcharts illustrate the processes performed by the system according to the present application, and it is understood that the execution of the flowcharts does not need to be sequential, one or more steps may be omitted, one or more execution steps may be added, and one or more steps may be executed sequentially, in reverse order, or even simultaneously in some embodiments.

The vehicles involved in the following embodiments may be hybrid electric vehicles (HEVs), battery electric vehicles (BEVs), plug-in hybrid electric vehicles (PHEVs), full hybrid electric vehicles (FHEVs), fuel cell vehicles, and the like, and may also be buses, ships, or aircraft. The vehicle may be non-autonomous, semi-autonomous (e.g., some routine motion functions are controlled by the vehicle), or autonomous (e.g., motion functions are controlled by the vehicle without direct input from a driver). The vehicle may include a powertrain. In some embodiments, the powertrain may be a power-split transmission system, which may include a first drive system and a second drive system. The first drive system includes a combination of an engine and a generator (i.e., a first electric machine). The second drive system includes at least a motor (i.e., a second electric machine), a generator, and a battery assembly comprising a plurality of batteries. The battery assembly may provide electric power to drive the motor. During regenerative braking, the motor and the generator may output electric power to the battery assembly for storage.

The access to vehicle involved in the following embodiments mainly refers to obtaining the authority to access or approach an internal cabin of the vehicle, including scenarios where an occupant enters the internal cabin of the vehicle, such as for riding, where at least a part of the occupant (e.g., a hand) enters the internal cabin of the vehicle, such as for taking or placing items, or other scenarios where access to the internal cabin of the vehicle is possible.

As mentioned in the background, when the state of charge of the battery is low, access to the vehicle interior can be provided by the auxiliary unlocking system of the vehicle. For example, auxiliary unlocking of the vehicle can be provided by the cooperation of a lock core and its corresponding mechanical key. Usually, the lock core is integrated into an exterior door handle system of the vehicle to allow an exterior door of the vehicle to be opened using a mechanical key to access the vehicle when the state of charge of a battery of the vehicle is low. After the door is opened, the battery of the vehicle can be charged by opening a front cabin cover of the vehicle, thereby restoring normal functionality to the vehicle.

With people's expectations for the modern styling of pure electric vehicles, the design goal is to achieve a smooth side appearance without any interruptions from door handles, for example, designing the door handle system to be hidden, which poses a challenge to the installation of the lock core on the side door of the vehicle. Based on similar expectations, in addition to the side of the vehicle, for example, the rear of the vehicle is also expected to achieve a smooth appearance, which also poses a challenge to the installation of the lock core at the rear of the vehicle.

Based at least on the situations listed above, the inventors of the present disclosure propose an auxiliary unlocking system and method for a vehicle and a vehicle including the auxiliary unlocking system, which provide auxiliary unlocking of the vehicle at least with a relatively low risk of theft, specifically:

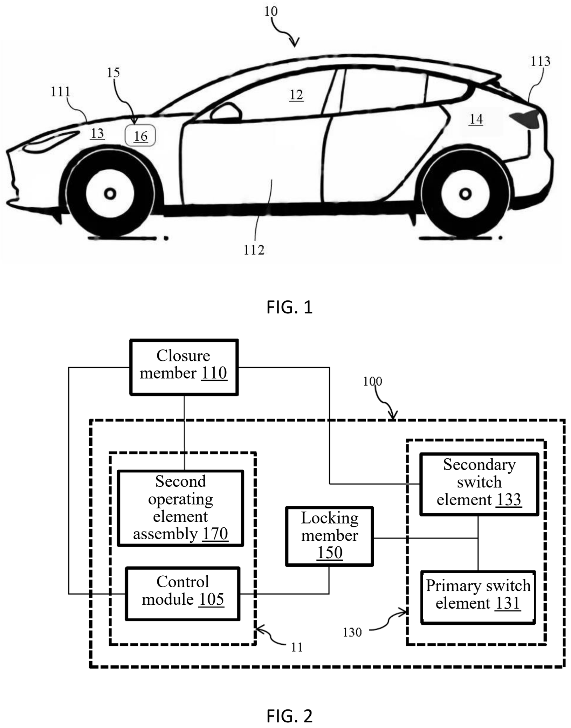

According to the first aspect of the present disclosure, as shown in FIGS. 1 and 2, there is provided an auxiliary unlocking system 100 for a vehicle 10. The auxiliary unlocking system 100 includes a first operating element assembly 130 operably connected to a closure member 110 of the vehicle 10 and located outside the vehicle 10. The first operating element assembly 130 is configured to be actuable to perform security verification and unlock the closure member 110 only when the state of charge of a battery (not shown in the figures) of the vehicle 10 is less than a threshold value.

Referring further to FIGS. 1 and 2, where FIG. 1 shows a schematic diagram of the vehicle 10 and FIG. 2 shows a schematic diagram of the auxiliary unlocking system 100 for the vehicle 10, the vehicle 10 may include an internal cabin 11, and an exterior that may include parts located outside the internal cabin 11. The internal cabin 11 may include, for example, a passenger cabin 12 mainly for passengers to ride in, an front cabin 13 for accommodating items such as engine or battery and located at the front of the passenger cabin 12, a rear cabin 14 mainly for storing items and located at the rear of the passenger cabin 12, or other compartments provided on the vehicle 10 and covered. The closure member 110 may cover the internal cabin 11 and/or be located outside the internal cabin 11. The closure member 110 may include a front cabin cover 111, a side door 112, or a rear cabin cover 113 corresponding to the front cabin 13, the passenger cabin 12, and the rear cabin 14, respectively. The vehicle 10 may further include a control module 105, which may be communicatively connected to various components of the vehicle 10 and configured to receive data from various components and send instructions to various components. In some embodiments, the control module 105 may be a vehicle computing system (VCS). As can be understood by those skilled in the art, the VCS may include a processor, a memory, a positioning device, a communication device, a Human Machine Interface (HMI), etc., and be capable of controlling various components of the vehicle 10. In the embodiment shown in FIG. 2, the control module 105 may be disposed within the internal cabin 11. In other embodiments, the control module 105 may also be disposed at other positions of the vehicle 10. The vehicle 10 may further include an external port 15 configured to receive a power source supplied to the vehicle 10. Although the external port 15 is shown at the front of the vehicle 10 in the embodiment of FIG. 1, in other embodiments, the external port 15 may also be located at the rear of the vehicle 10. The external port 15 may be a charging port through which external power can be received to charge the vehicle 10. The external port 15 may also be a refueling port through which external fuel (e.g., gasoline) can be received to refuel the vehicle 10. The external port 15 may be covered by a cover member 16, and the cover member 16 may have a first latch mechanism (not shown in the figures), through which the cover member 16 can be opened and closed when needed to facilitate supplying power to the vehicle 10.

The auxiliary unlocking system 100 may further include a second operating element assembly 170 also operably connected to the closure member 110. The first operating element assembly 130 and the second operating element assembly 170 may be independently controlled by a wiring device as described in other parts of the present application to unlock the closure member 100 independently without affecting each other. As shown in FIG. 2, the second operating element assembly 170 is usually disposed within the internal cabin 11 of the vehicle 10. When the state of charge of the battery is greater than or equal to the threshold value, the user can access the vehicle 10 via, for example, a smart key and operate the second operating element assembly 170 to unlock the closure member 110. However, when the state of charge of the battery is less than the threshold value, it will be impossible to access the vehicle 10 via, for example, a smart key, and thus it will be impossible to unlock the closure member 110 by operating the second operating element assembly 170. In this regard, when the state of charge of the battery is less than the threshold value, security verification related to accessing the vehicle 10 can be performed via the first operating element assembly 130 according to the present disclosure, and unlocking of the closure member 110 is allowed, thereby accessing the vehicle 10 through the unlocked closure member 110. The security verification and unlocking of the closure member 110 may be performed substantially simultaneously, or the unlocking of the closure member 110 may be performed after the security verification is completed, as described in other parts of the present application. In one embodiment, the value range of the threshold value can be from 10% to 30%. Alternatively, the value range of the threshold value may be obtained through machine learning. Further, the value range of the threshold value may be dynamically adjusted according to the actual conditions of the vehicle 10, for example, according to the current state of charge of the vehicle 10, the estimated driving range, and other factors.

In some embodiments, as shown in FIG. 2, the first operating element assembly 130 may include a primary switch element 131 and a secondary switch element 133. The primary switch element 131 may include, for example, a handle, a button, a knob, or other elements operable by a user. The secondary switch element 133 may include, for example, a lock core or other components designed to correspond to a specifically designed mechanical component and capable of cooperating with the mechanical component to perform security verification and achieve mechanical unlocking when the verification is passed. The primary switch element 131 may be configured to be actuable to open a cover member covering the secondary switch element 133 in response to the state of charge of the battery being less than the threshold value, and the secondary switch element 133 may be configured to be actuable to perform security verification and unlock the closure member 110. In one embodiment, the secondary switch element 133 may be disposed within the external port 15 described above and covered by the cover member 16.

In the present disclosure, the primary switch element 131 can only be actuated when the state of charge of the battery is less than the threshold value. The term "actuable" can be understood as being able to open the cover member covering the secondary switch element 133 when needed, but the primary switch element 131 will not automatically open the cover member covering the secondary switch element 133 when the state of charge is less than the threshold value. When the state of charge of the battery is greater than or equal to the threshold value, even if the user operates the primary switch element 131, it cannot be actuated, and accordingly, the cover member covering the secondary switch element 133 cannot be opened. Similarly, the secondary switch element 133 can be actuated to perform security verification and unlock the closure member 110 when needed. Based at least on such a configuration, unauthorized operation of the primary switch element 131 by an unauthorized user can be prevented, and unlocking of the closure member 110 via the secondary switch element 133 to access the internal cabin 11 of the vehicle 10 can be prevented. Based at least on this, the present disclosure achieves an auxiliary unlocking solution with a relatively lower anti-theft risk by designing a two-stage switch unlocking mode.

In some embodiments, to realize the "actuable" primary switch element 131, as shown in FIG. 2, the auxiliary unlocking system 100 may further include a locking member 150 disposed between the secondary switch element 133 and the primary switch element 131, through which a locked state of the secondary switch element 133 and the primary switch element 131 is released when the state of charge of the battery is less than the threshold value, thereby allowing the primary switch element 131 to be actuated, and the locked state of the secondary switch element 133 and the primary switch element 131 is maintained when the state of charge of the battery is greater than or equal to the threshold value, thereby preventing the primary switch element 131 from being actuated. The locking member 150 may be connected to the control module 105 of the vehicle 10 and controlled by the control module 105. In a default state, the control module 105 may control the locking member 150 to maintain the locked state of the primary switch element 131 and the secondary switch element 133.

In the embodiment where the secondary switch element 133 is disposed within the external port 15, the locking member 150 may be disposed between the primary switch element 131 and the cover member 16 of the secondary switch element 133. The locking member 150 may be configured to: release the locked state of the primary switch element 131 and the cover member in response to the state of charge being less than the threshold value, to allow the primary switch element 131 to be actuated to open the cover member; and maintain the locked state of the primary switch element 131 and the cover member in response to the state of charge being greater than or equal to the threshold value, to prevent the primary switch element 131 from being actuated to open the cover member. By providing the locking member, in a simple and easy-to-implement manner, the opening of the cover member via the primary switch element 131 is prevented when the state of charge is greater than or equal to the threshold value, thereby preventing access to the secondary switch element 133 and thus preventing unauthorized access to the closure member 110. Meanwhile, when the state of charge is less than the threshold value, it is ensured that the primary switch element 131 can be actuated to open the cover member, allowing access to the secondary switch element 133 and thus access to the closure member 110.

When the control module 105 receives a message from, for example, a battery management system that the state of charge of the battery is less than the threshold value, the control module 105 sends an instruction to the locking member 150 to release the locked state of the primary switch element 131 and the cover member; and when the control module 105 receives a message that the state of charge of the battery is greater than or equal to the threshold value, the control module 105 controls the locking member 150 to maintain the locked state of the primary switch element 131 and the cover member. In the default state, the locking member 150 may maintain the locked state of the primary switch element 131 and the cover member.

The primary switch element 131 may be connected to the cover member 16 of the secondary switch element 133 via a cable (hereinafter referred to as the cable-connected embodiment), and the locking member 150 may be disposed on the cable. The primary switch element 131 may be, for example, a handle connected to one end of the cable. When the locking member 150 maintains the locked state of the primary switch element 131 and the cover member 16 of the secondary switch element 133, the user cannot open the cover member 16 by pulling the handle; whereas when the locking member 150 releases the locked state, the user can open the cover member 16 by pulling the handle. Alternatively, the primary switch element 131 may be integrated with the cover member 16 of the secondary switch element 133, and the locking member 150 may be further integrated with the primary switch element 131 and the cover member 16 (hereinafter referred to as the integrated-connected embodiment). For example, the primary switch element 131 may be integrated with the locking member 150 on the cover member 16, and the primary switch element 131 may be, for example, a groove provided on an outer surface of the cover member 16 or a specific area flush with the outer surface. When the user places a finger in the groove or the specific area and presses it, if the locking member 150 maintains the locked state of the primary switch element 131 and the cover member 16 of the secondary switch element 133, the cover member 16 cannot be opened; whereas when the locking member 150 releases the locked state, the pressing of the finger can open the cover member 16.

The locking member 150 may include an electric locking device (not shown in the figures), such as an electromagnetic locking device or an electric clamp. The electromagnetic locking device may be disposed between the first latch mechanism of the cover member 16 and the primary switch element 131, and configured to be de-energized to release the locked state of the primary switch element 131 and the first latch mechanism in response to the state of charge being less than the threshold value, and to be energized to maintain the locked state of the primary switch element 131 and the first latch mechanism in response to the state of charge being greater than or equal to the threshold value. The electromagnetic locking device may include an electromagnetic device (e.g., an electromagnetic lock body) and a corresponding ferromagnetic material (e.g., an electromagnetic lock armature). When energized, the electromagnetic device attracts the ferromagnetic material to achieve locking; after de-energized, the magnetism disappears, and the lock is released. In the integrated-connected embodiment, the electromagnetic lock body may be disposed on the first latch mechanism, and the electromagnetic lock armature may be disposed on an inner side of the cover member 16 corresponding to the primary switch element 131 (the groove or specific area described above), such that when energized, the first latch mechanism and the primary switch element 131 are locked and cannot move, and at this time, even if operated (e.g., pressed), the primary switch element 131 cannot be actuated; when de-energized, the magnetism disappears, and the locking of the first latch mechanism and the primary switch element 131 is released. In the cable-connected embodiment, the electromagnetic lock body and the electromagnetic lock armature may be disposed at two positions on the cable (for example, holes for the cable to pass through may be provided on the electromagnetic lock body and the electromagnetic lock armature with a certain amount of cable between them), and further fixed to the vehicle 10. When energized, the electromagnetic lock body and the electromagnetic lock armature are locked together, locking the cable between the primary switch element 131 and the first latch mechanism, such that even if the user operates the primary switch element 131, the operating force cannot be transmitted to the first latch mechanism through the cable, thus preventing the cover member from being opened by the primary switch element 131 via the first latch mechanism; when de-energized, the magnetic force disappears, and the cable between the primary switch element 131 and the first latch mechanism can normally transmit the operating force related to the operation of the primary switch element 131. Under the action of the operating force, the first latch mechanism is unlocked to open the cover member. Similarly, the electric clamp may maintain clamping when energized and release clamping when de-energized, which will not be elaborated herein.

Alternatively, the locking member 150 may include a mechanical locking device (not shown in the figures). The mechanical locking device includes a locking element and an engaging portion disposed between the first latch mechanism and the primary switch element 131. The mechanical locking device may be configured to disengage the locking element from the engaging portion in response to the state of charge being less than the threshold value, to release the locked state of the primary switch element 131 and the first latch mechanism, and engage the locking element with the engaging portion in response to the state of charge being greater than or equal to the threshold value, to maintain the locked state of the primary switch element 131 and the first latch mechanism. The locking element and the engaging portion may be a ratchet and pawl, a pin and a lock hole or a slot, or other components capable of achieving mechanical locking. In the integrated-connected embodiment, one of the locking element and the engaging portion may be connected to the first latch mechanism, while the other may be disposed on the inner side of the cover member 16 corresponding to the primary switch element 131 (the groove or specific area described above). When the locking element and the engaging portion are engaged, the first latch mechanism and the primary switch element 131 are locked and cannot move, and at this time, even if operated (e.g., pressed), they cannot be actuated; when the locking element is disengaged from the engaging portion, the locking of the first latch mechanism and the primary switch element 131 is released. In the cable-connected embodiment, the locking element and the engaging portion may be disposed at two positions on the cable and further fixed to the vehicle 10. When the locking element and the engaging portion are engaged, they are locked together, locking the cable between the primary switch element 131 and the first latch mechanism, such that even if the user operates the primary switch element 131, the operating force cannot be transmitted to the first latch mechanism through the cable, thus preventing the cover member from being opened by the primary switch element 131 via the first latch mechanism; when the locking element is disengaged from the engaging portion, the cable between the primary switch element 131 and the first latch mechanism can normally transmit the operating force related to the operation of the primary switch element 131, and under the action of the operating force, the first latch mechanism is unlocked to open the cover member. Similarly, the pin and the lock hole or slot may adopt a similar configuration, which will not be elaborated herein.

In addition, a clutch device may be used instead of the locking member 150. The clutch device may include a fixed part and a movable part, wherein the fixed part is connected to the first latch mechanism, and the movable part is connected to the primary switch element 131 via a cable. The clutch device is configured to engage the fixed part and the movable part in response to the state of charge being less than the threshold value, and disengage the fixed part from the movable part in response to the state of charge being greater than or equal to the threshold value. When the fixed part and the movable part are engaged, they form a path, and the operating force of the user operating the primary switch element 131 can be transmitted to the first latch mechanism through the cable, thereby opening the cover member; when the fixed part and the movable part are disengaged, they form an open circuit, and the operating force of the user operating the primary switch element 131 cannot be transmitted to the first latch mechanism through the cable, thus failing to open the cover member.

As described above, the secondary switch element 133 may be disposed within the external port 15. To prevent risks associated with the theft of the secondary switch element 133, in some embodiments, the secondary switch element 133 may be mounted on a body component of the vehicle 10 via an anti-theft bolt, wherein the anti-theft bolt is configured such that its bolt head can be sheared off after the installation of the secondary switch element 133 is completed. Since the bolt head is sheared off after installation, the anti-theft bolt cannot be unscrewed by tools anymore, thereby ensuring that the secondary switch element 133 can be disposed on the body component with a minimal risk of theft, and further ensuring that the closure member 110 is not unlocked to prevent theft of its contents.

According to the present disclosure, when the state of charge of the battery is less than the threshold value, the cover member covering the secondary switch element 133 can be opened by actuating the primary switch element 131, and then the closure member 110 can be unlocked by actuating the secondary switch element 133, thereby solving at least the problem of being unable to access the vehicle 10 caused by insufficient state of charge of the vehicle battery.

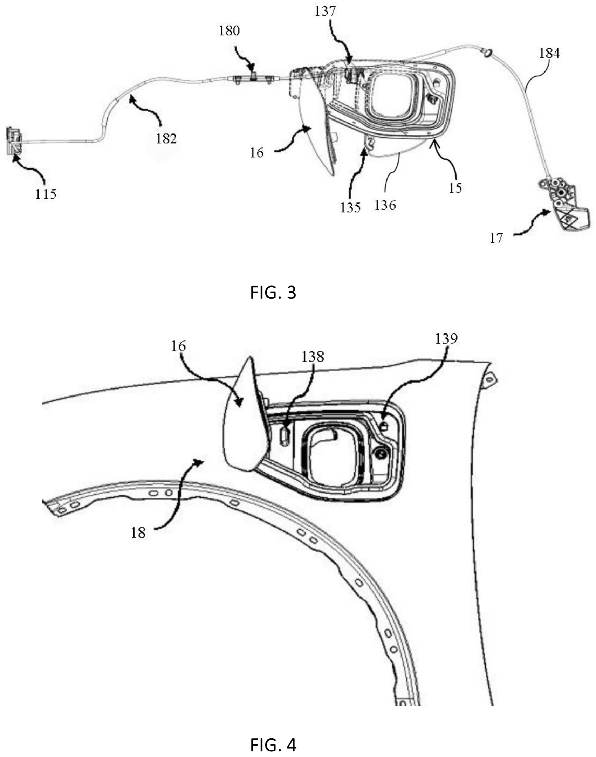

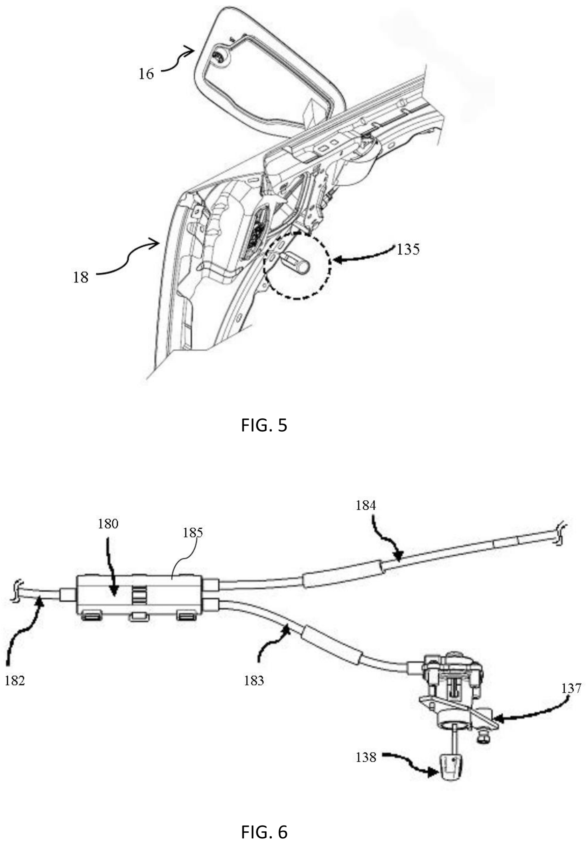

An embodiment of the auxiliary unlocking system 100 for the vehicle 10 according to the present disclosure will be further described with reference to FIGS. 3-12 based on FIGS. 1-2. In this embodiment, the external port 15 may include a housing 139, and the housing 139 may define an internal space for accommodating at least a charging port or a refueling port. The primary switch element 131 includes a first release handle 135 disposed near the external port 15, and the first release handle 135 is generally disposed outside the internal cabin 11 in a concealed manner. For example, the first release handle 135 may be disposed inside the vehicle body such that people passing by the vehicle 10 will not see the first release handle 135. As shown in FIGS. 4 and 5, the first release handle 135 may be disposed inside a fender 18 of the vehicle 10, thereby being concealed by the fender 18. The secondary switch element 133 may include a lock core 137 disposed within the internal space of the external port 15. The first release handle 135 may be connected to a first latch mechanism (not shown) of the cover member 16 via a first cable 136. In this embodiment, the closure member 110 may be embodied as a front cabin cover 111 and include a second latch mechanism 115. In addition, the second operating element assembly 170 may include a second release handle 17 disposed inside the passenger cabin 12 of the vehicle 10. A wiring device 180 is also shown in FIGS. 3, 6, and 7, and the wiring device 180 may be connected to the second latch mechanism 115 via a second cable 182. In addition, the lock core 137 and the second release handle 17 may be connected to the wiring device 180 via a third cable 183 and a fourth cable 184, respectively.

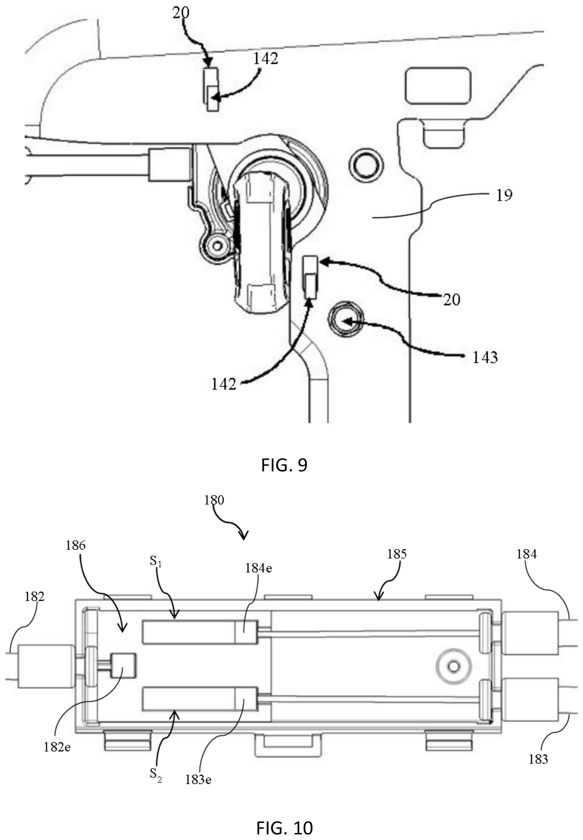

As shown in FIGS. 6 and 10, the wiring device 180 includes a housing 185 and a moving portion 186 disposed within the housing 185. The moving portion 186 is connected to the second latch mechanism 115, the lock core 137, and the second release handle 17 via the second cable 182, the third cable 183, and the fourth cable 184, respectively, and is configured to move under the action of the third cable 183 and the fourth cable 184, respectively, and drive the second cable 182 to move to unlock the second latch mechanism 115. Through the wiring device 180, independent control of the unlocking of the second latch mechanism 115 by the lock core 137 and the second release handle 17 can be achieved, thereby accessing the closure member 110. In the embodiment shown in FIG. 10, the fourth cable 184 is engaged with the moving portion 186 via a fourth end fitting 184e, the third cable 183 is engaged with the moving portion 186 via a third end fitting 183e, and the second cable 182 is engaged with the moving portion 186 via a second end fitting 182e, wherein the fourth end fitting 184e and the third end fitting 183e can move within two corresponding sliding grooves S₁ and S₂ of the moving portion 186, respectively. When the user pulls the second release handle 17, the operating force is transmitted from the fourth cable 184 to the fourth end fitting 184e, and the fourth end fitting 184e moves the moving portion 186 to the right. The rightward movement of the moving portion 186 causes the second end fitting 182e to move to the right, thereby driving the second cable 182 to move to the right and releasing the second latch mechanism 115. During this process, the third end fitting 183e remains in its position without moving. Similarly, when the user pulls the first release handle 135, the operating force is transmitted from the third cable 183 to the third end fitting 183e, and the third end fitting 183e moves the moving portion 186 to the right. The rightward movement of the moving portion 186 causes the second end fitting 182e to move to the right, thereby driving the second cable 182 to move to the right and releasing the second latch mechanism 115. During this process, the fourth end fitting 184e remains in its position without moving. The wiring device 180 can distinguish the actions initiated by the second release handle 17 and the first release handle 135, ensuring that each action is triggered independently without affecting the operations initiated by the second release handle 17 or the first release handle 135.

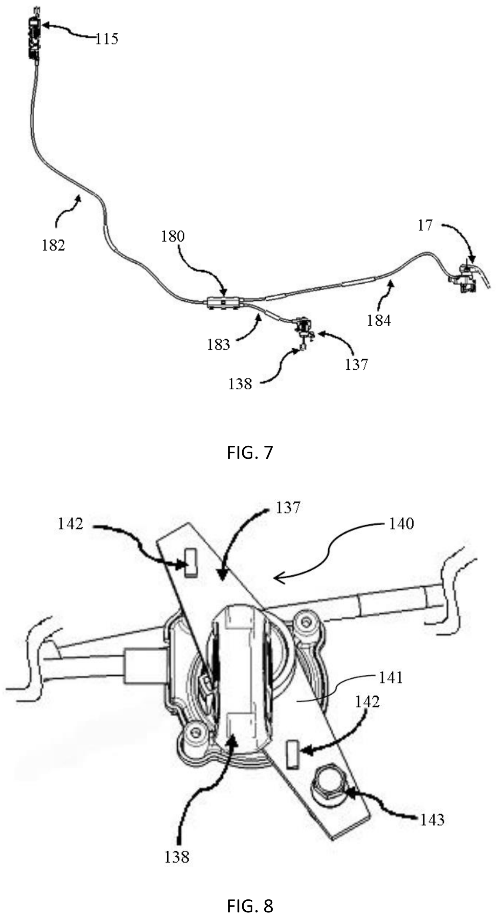

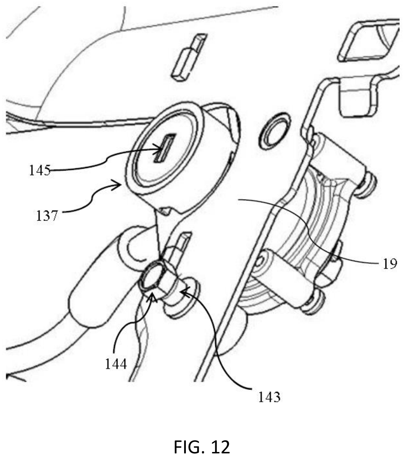

The lock core 137 may be mounted on a body component of the vehicle 10 via a positioning component 140. In the embodiment shown in FIGS. 8 and 9, the lock core 137 may be mounted on the fender 18 via the positioning component 140, wherein the fender 18 includes a fender bracket 19. The positioning component 140 may include a positioning plate 141 that can be disposed on the lock core 137 and at least one positioning block 142 disposed on the positioning plate 141. Correspondingly, a positioning hole 20 for receiving the positioning block 142 is provided on the fender bracket 19. The positioning plate 141 and the positioning block 142 thereon can be pre-assembled on the fender bracket 19 to achieve a hands-free function. In addition, as shown in FIG. 12, the lock core 137 may be fixed to the fender bracket 19 via an anti-theft bolt 143. Once the anti-theft bolt 143 is tightened, the bolt head 144 of the anti-theft bolt 143 can be sheared off (FIG. 12 shows the state where the bolt head 144 has not been sheared off). Therefore, even if the cover member 16 is accidentally opened, the lock core 137 cannot be disassembled from the outside, thereby preventing tampering or theft of the lock core 137, and further preventing the closure member 110 from being opened by the lock core 137 to reduce the risk of theft of the contents in the internal cabin 11 corresponding to the closure member 110.

The lock core 137 may be configured to perform security verification and unlock the closure member through at least one interaction with a key. In one embodiment, the key may be a mechanical key 138 with a tooth profile matching the lock core 137, which can interact with the lock core 137 by being inserted into the lock hole 145 of the lock core 137. When the tooth profile of the mechanical key 138 matches the internal structure of the lock core 137, the security verification is completed, and the rotation of the mechanical key 138 inside the lock core 137 can cause the lock core 137 to pull the third cable 183, thereby unlocking the second latch mechanism 115 under the action of the wiring device 180.

Optionally, the lock core 137 may include a self-resetting spring (not shown in the figures) disposed therein. After the mechanical key 138 is inserted into the lock core 137 and rotated in a specific direction (e.g., counterclockwise) to interact with the internal structure of the lock core 137, it resets via the self-resetting spring, and the second latch mechanism 115 is unlocked only when the mechanical key 138 is rotated again in the specific direction to interact with the internal structure of the lock core 137. By setting such an unlocking method different from the traditional one, the security level of the lock core 137 can be improved, achieving a further anti-theft effect.

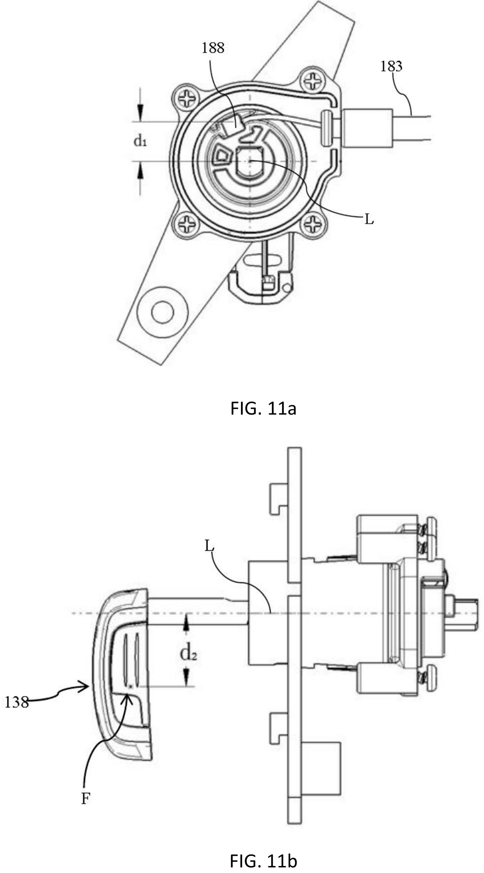

As shown in FIGS. 11a and 11b, the lock core 137 is rotatable along an axis L. The lock core 137 may be connected to the third cable 183 via a first end fitting 188. When the lock core 137 is actuated under the action of the mechanical key 138, the first end fitting 188 can be regarded as the force application point of the lock core 137, through which the third cable 183 is pulled. Optionally, a first distance d₁ between the first end fitting 188 and the axis L may be smaller than a second distance d₂ between the force application point F of the operating force of the mechanical key 138 and the axis L. Such a configuration can provide a leverage ratio that reduces the operating force of the mechanical key 138, enabling the lock core 137 to be rotated with a smaller operating force, saving the user's operating force and providing a more customer-friendly solution. In one embodiment, d₁ may be 6-12 mm, and d₂ may be 9-24 mm, thus the leverage ratio is 1.5-2. Assuming that the force required to pull the third cable 183 is 50 N, the user's hand only needs to provide a force of 50 N/2 or 50 N/1.5 = 25 N ~ 33.3 N to unlock the front cabin cover 111 by pulling the third cable 183, reducing the hand operating force required by the user. In another embodiment, the value ranges of the first distance d₁, the second distance d₂, and the leverage ratio may be obtained through machine learning. Further, the value ranges of the first distance d₁, the second distance d₂, and the leverage ratio may be adjusted according to the specific size and structure of the lock core 137.

In the embodiment where the closure member 110 is embodied as the front cabin cover 111, a vehicle battery may be accommodated in the front cabin 13 corresponding to the front cabin cover 111. With the primary switch element 131 disposed outside the internal cabin 11 and the secondary switch element 133 disposed within the external port 15 according to the present disclosure, when the state of charge of the vehicle battery is less than the threshold value, an authorized user can open the cover member of the secondary switch element 133 by actuating the primary switch element 131, and then open the front cabin cover 111 by actuating the secondary switch element 133, thereby accessing the battery accommodated in the front cabin 13, for example, performing a jump start or other operations. Whereas when the state of charge of the vehicle battery is greater than or equal to the threshold value, even if the primary switch element 131 is actuated, the cover member of the secondary switch element 133 will not be opened, and thus the front cabin cover 111 will not be opened, thereby reducing the risk of theft of the battery accommodated in the front cabin 13.

It should be understood that although the technical solution of the present disclosure has been described in detail above through the embodiment where the closure member 110 is embodied as the front cabin cover 111, the present disclosure is also applicable to the case where the closure member 110 is embodied as the side door 112, the rear cabin cover 113, or other vehicle closure members. When the state of charge of the vehicle battery is lower than the threshold value, unlocking of the closure member can be achieved through the two-stage switch design of the first operating element assembly 130 according to the present disclosure, thereby accessing the vehicle, and all such solutions are within the protection scope of the present disclosure. In addition, the number and relative positions of specific components in the embodiments are merely schematic, and other possible changes and adjustments are within the scope of the present disclosure.

According to the second aspect of the present disclosure, as shown in FIGS. 1 and 2, there is provided a vehicle 10, comprising: a closure member 110; and an auxiliary unlocking system 100, the auxiliary unlocking system 100 including a first operating element assembly 130 operably connected to the closure member 110 and located outside the vehicle 10, wherein the first operating element assembly 130 may be configured to be actuable to perform security verification and unlock the closure member 110 only when the state of charge of a battery of the vehicle 10 is less than a threshold value.

It should be understood that all the embodiments, features, and advantages of the auxiliary unlocking system 100 according to the present disclosure described above are equally applicable to the vehicle 10 according to the present disclosure, provided that there is no conflict. That is, all the embodiments and variations of the auxiliary unlocking system 100 described above can be directly transferred and applied to the vehicle 10 according to the present disclosure and directly incorporated herein. For the sake of brevity of the present application, they will not be repeated here.

According to the third aspect of the present disclosure, there is provided an auxiliary unlocking method for a vehicle, comprising: performing security verification and unlocking a closure member of the vehicle via a first operating element assembly only when the state of charge of a battery of the vehicle is less than a threshold value. For example, the auxiliary unlocking method according to the present disclosure can be used to perform auxiliary unlocking of the vehicle 10 by using the first operating element assembly 130 described in other embodiments of the present disclosure.

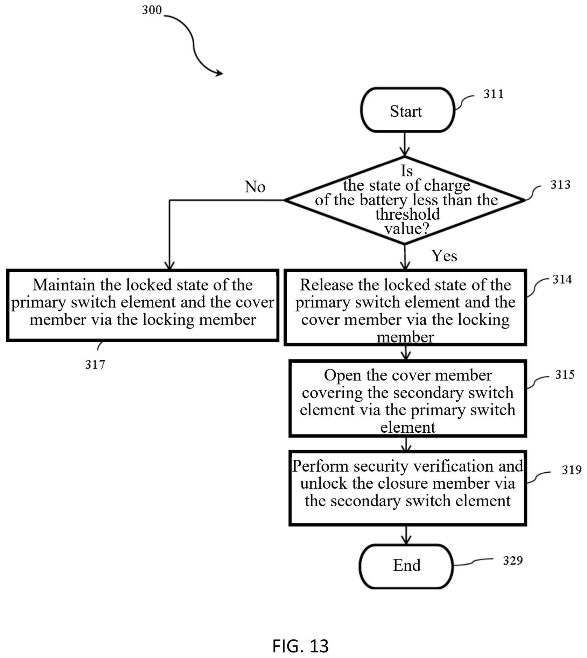

FIG. 13 shows an embodiment of the auxiliary unlocking method for the vehicle 10 according to the present disclosure (method 300). The method 300 may start at block 311. For example, the method 300 may start in response to the vehicle 10 being parked (e.g., parked on the side of the road, in a garage, or in a parking lot). Next, at block 313, it is determined whether the state of charge of the vehicle battery is less than the threshold value. For example, the control module 105 of the vehicle 10 may determine the state of charge based on a message from, for example, the battery management module. If the state of charge is less than the threshold value, the method 300 proceeds to block 314; otherwise, the method 300 proceeds to block 317. At block 314, the locked state of the primary switch element 131 and the cover member 16 is released via the locking member 150. In the default setting of the vehicle 10, the locking member 150 may always maintain the locked state until the state of charge of the battery is less than the threshold value. Next, at block 315, the cover member 16 covering the secondary switch element 133 can be opened via the primary switch element 131. For example, the user can operate the primary switch element 131 to open the cover member 16, thereby accessing the secondary switch element 133. After the cover member 16 is opened, the method 300 proceeds to block 319, where security verification can be performed and the closure member 110 can be unlocked via the secondary switch element 133. For example, the user can cooperate with the secondary switch element 133 by means of an authorization credential (e.g., the mechanical key described in other embodiments) to perform security verification and unlock the closure member 110.

At block 317, the locked state of the primary switch element 131 and the cover member 16 is maintained via the locking member 150. Optionally or additionally, the closure member 110 can be unlocked via the second operating element assembly 170.

After blocks 317 and 319, the method 300 ends at block 329.

In summary, the auxiliary unlocking system and method for a vehicle and the vehicle including the auxiliary unlocking system proposed by the present disclosure provide an emergency opening solution for accessing the vehicle when the state of charge of the vehicle battery is less than the threshold value. At least through the primary switch element, the secondary switch element, the lock core, and other components, unauthorized access to the vehicle closure member is at least prevented, and theft of the contents of the closure member is avoided. This solution is particularly suitable for vehicles where there is no space to install a lock core on the exterior surface.

The following numbered statements form part of the present disclosure:
Statement 1. An auxiliary unlocking system for a vehicle, comprising a first operating element assembly operably connected to a closure member of the vehicle and located outside the vehicle, wherein the first operating element assembly is configured to be actuable to perform security verification and unlock the closure member only when state of charge of a battery of the vehicle is less than a threshold value.
Statement 2. The auxiliary unlocking system according to Statement 1, wherein the first operating element assembly comprises a primary switch element and a secondary switch element, the primary switch element being configured to be actuable to open a cover member covering the secondary switch element in response to the state of charge of the battery being less than the threshold value, and the secondary switch element being configured to be actuable to perform security verification and unlock the closure member.
Statement 3. The auxiliary unlocking system according to Statement 2, further comprising a locking member disposed between the cover member and the primary switch element, the locking member being configured to: release a locked state of the primary switch element and the cover member in response to the state of charge being less than the threshold value, so as to allow the primary switch element to be actuated to open the cover member; and maintain the locked state of the primary switch element and the cover member in response to the state of charge being greater than or equal to the threshold value, so as to prevent the primary switch element from being actuated to open the cover member.
Statement 4. The auxiliary unlocking system according to Statement 3, wherein the locking member comprises an electric locking device or a mechanical locking device, and the primary switch element is connected to a first latch mechanism of the cover member.
Statement 5. The auxiliary unlocking system according to Statement 4, wherein the electric locking device comprises an electromagnetic locking device disposed between the first latch mechanism and the primary switch element, the electromagnetic locking device being configured to be de-energized to release a locked state of the primary switch element and the first latch mechanism in response to the state of charge being less than the threshold value, and to be energized to maintain the locked state of the primary switch element and the first latch mechanism in response to the state of charge being greater than or equal to the threshold value.
Statement 6. The auxiliary unlocking system according to Statement 4, wherein the mechanical locking device comprises a locking element and an engaging portion disposed between the first latch mechanism and the primary switch element, the mechanical locking device is configured to disengage the locking element from the engaging portion in response to the state of charge being less than the threshold value, so as to release the locked state of the primary switch element and the first latch mechanism; and to engage the locking element with the engaging portion in response to the state of charge being greater than or equal to the threshold value, so as to maintain the locked state of the primary switch element and the first latch mechanism.
Statement 7. The auxiliary unlocking system according to any of Statements 4 to 6, wherein the primary switch element is connected to the first latch mechanism via a first cable, on which the locking member is disposed; or the primary switch element, the first latch mechanism and the locking member are integrated together.
Statement 8. The auxiliary unlocking system according to any of Statements 2 to 7, wherein the secondary switch element is disposed within an external port of the vehicle, and the external port is configured to receive a power source supplied to the vehicle.
Statement 9. The auxiliary unlocking system according to Statement 8, wherein the secondary switch element is mounted on a body component of the vehicle via an anti-theft bolt, and the anti-theft bolt is configured such that its bolt head can be sheared off after the installation of the secondary switch element is completed.
Statement 10. The auxiliary unlocking system according to any of Statements 2 to 9, further comprising a wiring device and a second operating element assembly operably connected to the closure member, the wiring device being configured to independently control the first operating element assembly and the second operating element assembly to unlock the closure member respectively.
Statement 11. The auxiliary unlocking system according to Statement 10, wherein the wiring device comprises a housing and a moving portion disposed in the housing, the moving portion being connected to a second latch mechanism of the closure member, the secondary switch element and an operating element of the second operating element assembly via a second cable, a third cable and a fourth cable respectively, and being configured to move under the action of the third cable and the fourth cable respectively, and drive the second cable to move to unlock the second latch mechanism.
Statement 12. The auxiliary unlocking system according to any of Statements 2 to 11, wherein the secondary switch element comprises a lock core configured to perform security verification and unlock the closure member through at least one interaction with a key.
Statement 13. The auxiliary unlocking system according to Statement 12, wherein the lock core has a force application point when it is actuated and a rotation axis, the distance between the force application point and the rotation axis of the lock core is smaller than the distance between the key and the rotation axis.
Statement 14. The auxiliary unlocking system according to claim 12 or 13, wherein the lock core comprises a self-resetting spring and is configured to reset via the self-resetting spring after the key interacts with it for the first time in a specific direction and unlock the closure member when the key interacts with it again in the specific direction.
Statement 15. The auxiliary unlocking system according to any of Statements 1 to 14, wherein the closure member comprises a front cabin cover, a side door or a rear cabin cover of the vehicle.
Statement 16. A vehicle, comprising:
   a closure member; and
   an auxiliary unlocking system comprising a first operating element assembly operably connected to the closure member and located outside the vehicle, wherein the first operating element assembly is configured to be actuable to perform security verification and unlock the closure member only when state of charge of a battery of the vehicle is less than a threshold value.
Statement 17. An auxiliary unlocking method for a vehicle, comprising: performing security verification and unlocking a closure member of the vehicle via a first operating element assembly only when state of charge of a battery of the vehicle is less than a threshold value.
Statement 18. The auxiliary unlocking method according to Statement 17, wherein the first operating element assembly comprises a primary switch element and a secondary switch element, and the auxiliary unlocking method comprises:
   opening a cover member covering the secondary switch element via the primary switch element in response to the state of charge of the battery being less than the threshold value; and
   performing security verification and unlocking the closure member via the secondary switch element.
Statement 19. The auxiliary unlocking method according to Statement 18, comprising:
   releasing a locked state of the primary switch element and the cover member via a locking member in response to the state of charge being less than the threshold value, so as to allow the primary switch element to open the cover member; and
   maintaining the locked state of the primary switch element and the cover member via the locking member in response to the state of charge being greater than or equal to the threshold value, so as to prevent the primary switch element from opening the cover member.
Statement 20. The auxiliary unlocking method according to Statement 18 or 19, wherein the secondary switch element comprises a lock core, and the auxiliary unlocking method comprises: performing security verification and unlocking the closure member via the lock core through at least one interaction of a key with the lock core in a specific direction.

The technical features of the above-described embodiments may be combined in any manner. To simplify the description, not every possible combination of the technical features in the above embodiments has been described; however, as long as there is no contradiction between these combinations, they should all be considered within the scope of this specification.

The above-described embodiments merely represent several implementation modes of the present application, and their descriptions are specific and detailed; however, this should not be construed as limiting the scope of the invention. It should be noted that a person of ordinary skill in the art may make several variations and improvements without departing from the concept of the present application, and these shall all fall within the scope of protection of the present application. Therefore, the scope of protection of the patent of the present application shall be subject to the appended claims.

## Claims

1. An auxiliary unlocking system for a vehicle, comprising a first operating element assembly operably connected to a closure member of the vehicle and located outside the vehicle, wherein the first operating element assembly is configured to be actuable to perform security verification and unlock the closure member only when state of charge of a battery of the vehicle is less than a threshold value.

2. The auxiliary unlocking system according to claim 1, wherein the first operating element assembly comprises a primary switch element and a secondary switch element, the primary switch element being configured to be actuable to open a cover member covering the secondary switch element in response to the state of charge of the battery being less than the threshold value, and the secondary switch element being configured to be actuable to perform security verification and unlock the closure member.

3. The auxiliary unlocking system according to claim 2, further comprising a locking member disposed between the cover member and the primary switch element, the locking member being configured to: release a locked state of the primary switch element and the cover member in response to the state of charge being less than the threshold value, so as to allow the primary switch element to be actuated to open the cover member; and maintain the locked state of the primary switch element and the cover member in response to the state of charge being greater than or equal to the threshold value, so as to prevent the primary switch element from being actuated to open the cover member.

4. The auxiliary unlocking system according to claim 3, wherein the locking member comprises an electric locking device or a mechanical locking device, and the primary switch element is connected to a first latch mechanism of the cover member.

5. The auxiliary unlocking system according to claim 4, wherein the electric locking device comprises an electromagnetic locking device disposed between the first latch mechanism and the primary switch element, the electromagnetic locking device being configured to be de-energized to release a locked state of the primary switch element and the first latch mechanism in response to the state of charge being less than the threshold value, and to be energized to maintain the locked state of the primary switch element and the first latch mechanism in response to the state of charge being greater than or equal to the threshold value.

6. The auxiliary unlocking system according to claim 4, wherein the mechanical locking device comprises a locking element and an engaging portion disposed between the first latch mechanism and the primary switch element, the mechanical locking device is configured to disengage the locking element from the engaging portion in response to the state of charge being less than the threshold value, so as to release the locked state of the primary switch element and the first latch mechanism; and to engage the locking element with the engaging portion in response to the state of charge being greater than or equal to the threshold value, so as to maintain the locked state of the primary switch element and the first latch mechanism.

7. The auxiliary unlocking system according to any of claims 4 to 6, wherein the primary switch element is connected to the first latch mechanism via a first cable, on which the locking member is disposed; or the primary switch element, the first latch mechanism and the locking member are integrated together.

8. The auxiliary unlocking system according to any of claims 2 to 7, wherein the secondary switch element is disposed within an external port of the vehicle, and the external port is configured to receive a power source supplied to the vehicle, e.g. wherein the secondary switch element is mounted on a body component of the vehicle via an anti-theft bolt, and the anti-theft bolt is configured such that its bolt head can be sheared off after the installation of the secondary switch element is completed.

9. The auxiliary unlocking system according to any of claims 2 to 8, further comprising a wiring device and a second operating element assembly operably connected to the closure member, the wiring device being configured to independently control the first operating element assembly and the second operating element assembly to unlock the closure member respectively.

10. The auxiliary unlocking system according to claim 9, wherein the wiring device comprises a housing and a moving portion disposed in the housing, the moving portion being connected to a second latch mechanism of the closure member, the secondary switch element and an operating element of the second operating element assembly via a second cable, a third cable and a fourth cable respectively, and being configured to move under the action of the third cable and the fourth cable respectively, and drive the second cable to move to unlock the second latch mechanism.

11. The auxiliary unlocking system according to any of claims 2 to 10, wherein the secondary switch element comprises a lock core configured to perform security verification and unlock the closure member through at least one interaction with a key.

12. The auxiliary unlocking system according to claim 11, wherein the lock core has a force application point when it is actuated and a rotation axis, the distance between the force application point and the rotation axis of the lock core is smaller than the distance between the key and the rotation axis.

13. The auxiliary unlocking system according to claim 11 or 12, wherein the lock core comprises a self-resetting spring and is configured to reset via the self-resetting spring after the key interacts with it for the first time in a specific direction and unlock the closure member when the key interacts with it again in the specific direction.

14. A vehicle, comprising:
a closure member; and
the auxiliary unlocking system according to any of the preceding claims.

15. An auxiliary unlocking method for a vehicle, comprising: performing security verification and unlocking a closure member of the vehicle via a first operating element assembly only when state of charge of a battery of the vehicle is less than a threshold value.
